# EUROPEAN PATENT APPLICATION

(11) **EP 1 675 271 A1**
(43) Date of publication of application: **28.06.2006**
(21) Application number: 05028088.2
(22) Date of filing: 21.12.2005
(51) Int. Cl.: H04B 1/38, A45F 5/02

(54) **Method for assembling a clip of a case for a mobile phone and connecting structure of the clip**

(30) Priority: 24.12.2004 KR 2004112252
(71) Applicant: KIM, Dong-Joo, Seoul (KR)
(72) Inventor: KIM, Dong-Joo, Seoul (KR)
(74) Representative: Hruschka, Jürgen

(57) **Abstract**

A method for assembling a clip (100) of a case (C) for a mobile phone and a connecting structure of the clip (100) are disclosed, in which a slider (20) simply fitted into a slider connecting structure (10) is rotatably fixed to a bottom plate (30) of the clip (100) so that the clip (100) can be rotated at a certain angle and can detachably be fixed to the case (C) if necessary. Therefore, it is possible to clean dust that may be generated in the clip (100) due to long use. In addition, the connecting structure of the clip (100) is provided to easily connect or detach the clip (100) to or from the case (C). Moreover, it is possible to replace the clip (100) with another one if the clip (100) is out of order.

## Description

### BACKGROUND OF THE INVENTION

### Field of the Invention

The present invention relates to a method for assembling a clip of a case for a mobile phone and a connecting structure for the clip, and more particularly, to a method for assembling a clip of a case for a mobile phone and a connecting structure of the clip, in which a slider simply fitted into a slider connecting structure is rotatably fixed to a bottom plate of the clip so that the clip can be rotated at a certain angle and detachably be fixed to the case if necessary.

### Discussion of the Related Art

Generally, a clip of a case for a mobile phone is fixed to a rear surface of the case. The clip is used in such a manner that it is hung on a belt, which a user wears, so as to hold the mobile phone. This clip is similar to that of the present invention.

Hereinafter, a related art clip used in a case for a mobile phone will be described.

An example of a related art clip is disclosed in the Korean Registered Model No. 20-0262088 titled "Case for Mobile Phone." This related art clip is smoothly rotated along with a sound such as click and its angle is exactly controlled.

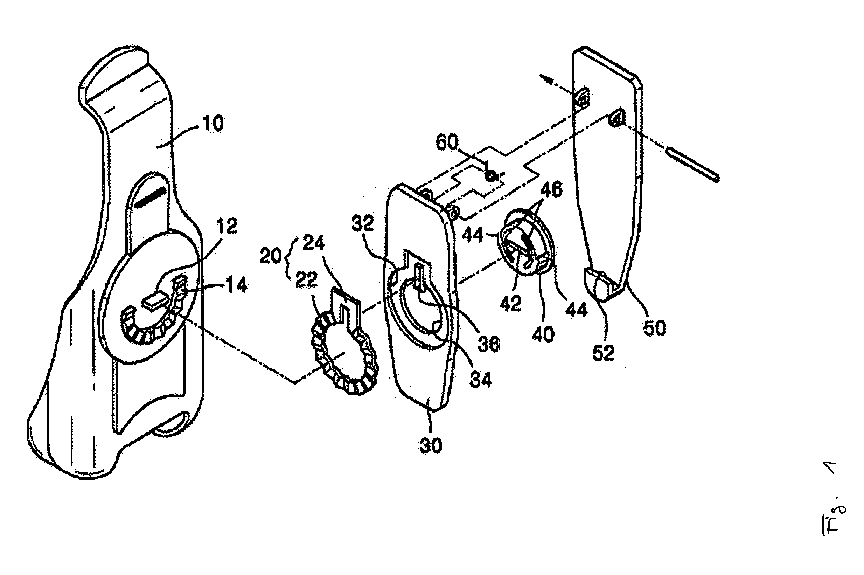

In other words, as shown in FIG. 1, a related art case having a clip includes a main body 10, an engagement member 20, a bottom plate 30, a clamp member 40, and a top plate 50.

The related art case further includes a key protrusion 12 and a toothed member 14. The key protrusion 12 controls the main body 10 and the clamp member 40 to rotate together.

The main body 10, the key protrusion 12 and the toothed member 14 can be manufactured in various shapes. Preferably, as shown in FIG. 1, the key protrusion 12 has a line shape while the toothed member 14 has a triangular uneven shape.

The engagement member 20 is provided between the main body 10 and the bottom plate 30, and has a ring shape. The engagement member 20 includes a toothed spring 22 and a rectangular plate 24. The toothed spring 22 is formed to correspond to the toothed member 14 of the main body 10. The rectangular plate 24 is formed at an upper portion of the engagement member 20 and rotatably fixed to the bottom plate 30.

Therefore, if a user rotates the mobile phone, a lilting sound such as "click" is generated when the toothed spring 22 and the toothed member 14 are rotated to cross each other in a state that the toothed spring 22 is engaged with the toothed member 14. The user can exactly control a rotational angle of the main body 10 and at the same time surmise the rotational angle after hearing the sound.

However, the related art case for the mobile phone has several problems. The main body 10 is in surface-contact with the toothed member 14, and the engagement member 20 is also in surface-contact with the toothed member 14. In this case, friction occurs due to the surface-contact. If the engagement member 20 or the toothed member 14 is worn due to such friction, it may easily lose its function.

Also, a problem in view of mechanical stability and durability occurs in that the toothed member 14 or the engagement member 20 may easily be damaged. Moreover, since the main body 10 and the engagement member 20 have a plate spring shape, their elastic force is undesirably generated, thereby failing to facilitate their operation.

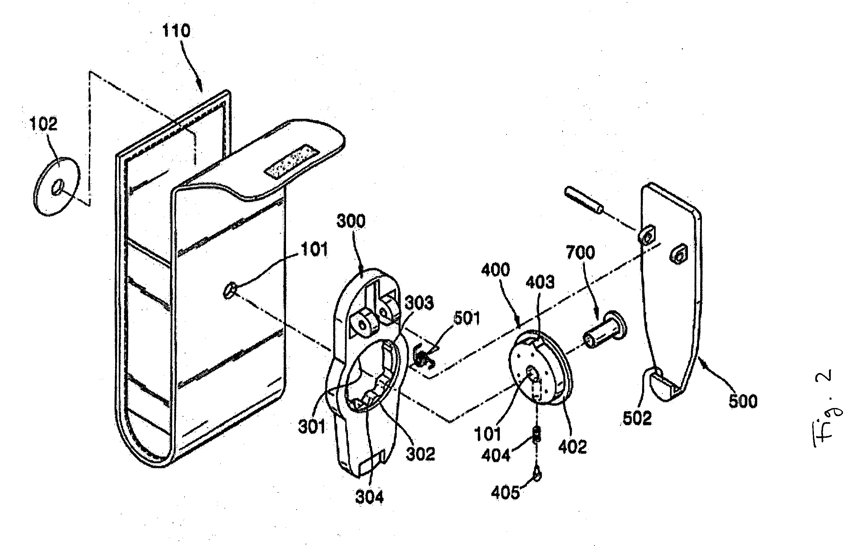

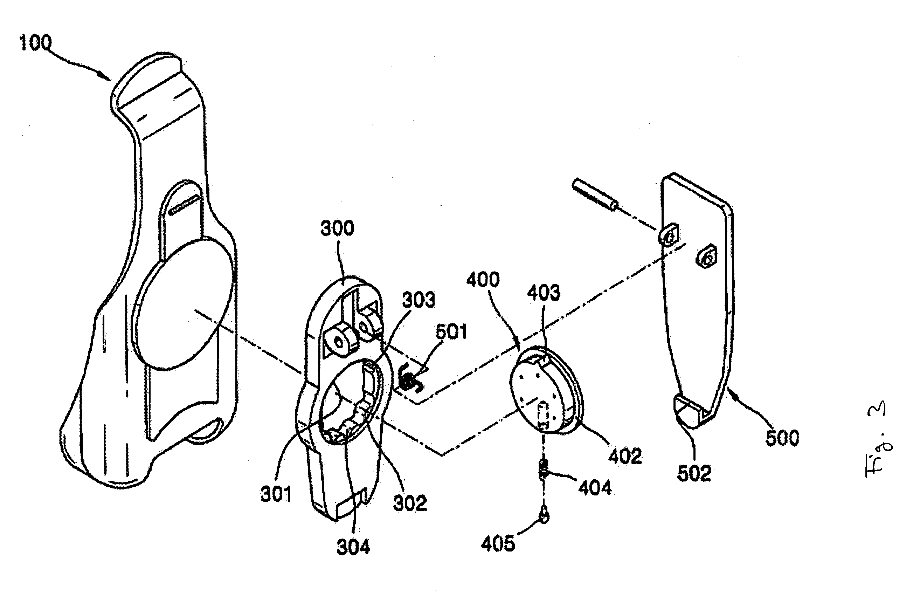

To solve the aforementioned problems, another related art case as shown in FIGs. 2 and 3 has been suggested.

This related art case has a shape corresponding to a mobile phone so that the mobile phone can be mounted thereon. The related art case includes a main body 100 of either soft material such as leather or hard material such as plastic, and a bottom plate 300 provided with a through hole 301 having a toothed groove 304. The toothed groove 304 is formed on an inner circumference of the through hole 301.

The related art case further includes a clamp member 400 and a top plate 500. The clamp member 400 is fixably inserted into the through hole 301 of the bottom plate 300. The top plate 500 is elastically fixed to the bottom plate 300 by a hinge. The bottom plate 300 and the top plate 500 constitute a clip.

The clamp member 400 is provided with an elastic ball 405. The elastic ball 405 can be elongated and contracted by a coil spring 404 in contact with the toothed groove 304 to correspond to the toothed groove 304 of the through hole 301.

Therefore, if the clip, which is a coupling body of the bottom plate 300 and the top plate 500, is fixed to the main body 100 of the case, the elastic ball 405 is in surface-contact with the clip along the toothed groove 304 of the through hole 301 as the clip rotates. In this case, the clip is smoothly rotated.

A frictional sound such as click is generated by rotation of the clip so that a user who wears the case can sense the rotational range.

This related art case prevents the engagement member 20 or the toothed member 14 of FIG. 1 from being worn or easily damaged.

However, the related art case shown in FIGs. 2 and 3 has a problem in that the clip cannot be detached from the case if it is once fixed to the main body of the case. For this reason, if structural elements constituting the clip and its connecting structure are covered with dust, it is difficult to clean them. Also, if the connecting structure is damaged, it is difficult to replace it with another one.

### SUMMARY OF THE INVENTION

Accordingly, the present invention is directed to a method for assembling a clip of a case for a mobile phone and a connecting structure of the clip, which substantially obviate one or more problems due to limitations and disadvantages of the related art.

An object of the present invention is to provide a method for assembling a clip of a case for a mobile phone and a connecting structure of the clip, in which a slider simply fitted into a slider connecting structure is rotatably fixed to a bottom plate of the clip so that the clip can be rotated at a certain angle and can detachably be fixed to the case if necessary.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a connecting structure of a clip of a case for a mobile phone according to the present invention includes a slider connecting structure including a "¬" shaped slider rack having an edge bent at one side, and an elastic stopper protruded with elasticity at an inlet portion of the slider rack to face the bent edge, a slider including a slider plate and a circular plate protruded from the slider plate, and a clamp member including a circular plate and an elastic click portion, wherein the slider is fitted into the slider rack and welded at high frequency in a state that insertion protrusions formed in the circular plate of the clamp member are fitted into insertion holes of the circular plate of the slider so that the slider is detached from the slider connecting structure if the clip needs to be used.

Furthermore, the elastic click portion includes a sliding groove cut into four sections from the bottom of the circular plate to its center portion, an elastic spring provided inside the sliding groove, an insertion hole into which the elastic spring is inserted, and an elastic protrusion having a rectangular shape corresponding to the sliding groove, rounded at the end to form a ball portion, wherein if the clip is rotated in a state that a toothed groove formed in the through hole of the bottom plate is in surface-contact with the ball portion of the elastic protrusion, the elastic protrusion is clicked while ascending and descending along the toothed groove so as to induce limited rotation.

In another aspect of the present invention, in a method for assembling a clip connected to a case for a mobile phone, the clip including a top plate and a bottom plate, the method includes the steps of fitting a clamp member to a through hole formed at the center of the bottom plate of the clip, fitting insertion protrusions of a slider corresponding to the clamp member into insertion holes by arranging the slider to face the through hole, welding the slider at high-frequency in a state that a circular plate of the slider is in contact with a circular plate of the clamp member as the insertion protrusions are fitted into the insertion holes, connecting the top plate of the clip to a coupling body of the slider, the bottom plate and the clamp member so as to constitute the clip, and fitting a slider plate of the slider connected to the clip into a slider connecting structure.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1 illustrates a connecting structure of a clip that can rotatably be fixed to a related art case for a mobile phone;
FIG. 2 illustrates a connecting structure of a clip that can rotatably be fixed to another related art leather case for a mobile phone;
FIG. 3 illustrates a connecting structure of a clip that can rotatably be fixed to other related art case for a mobile phone;
FIG. 4 illustrates a main part of a slider connecting structure according to the present invention;
FIG. 5 is an exploded perspective view illustrating a connecting structure of a clip fixed to a case for a mobile phone in accordance with the present invention;
FIG. 6 illustrates another connecting structure of a clip fixed to a leather case for a mobile phone in accordance with the present invention;
FIG. 7 illustrates another connecting structure of a clip fixed to a case for a mobile phone in accordance with the present invention;
FIG. 8 is a side view illustrating a slider connecting structure formed in a case for a mobile phone in a single body in accordance with the present invention;
FIG. 9 is a rear view illustrating a case of FIG. 8;
FIG. 10 illustrates a slider of the present invention, viewed from front, plane, and side;
FIG. 11 illustrates a clamp member of the present invention, viewed from side and rear surface;
FIG. 12 illustrates an elastic protrusion of an elastic click portion of the present invention, viewed from section and plane;
FIG. 13 is a side view illustrating a clip of the present invention, fixed to a case for a mobile phone;
FIG. 14 is a rear view illustrating a clip of the present invention, fixed to a case for a mobile phone;
FIG. 15 is a main view illustrating the operational state of an elastic click portion according to the present invention;
FIG. 16 illustrates the operation of an elastic click portion rotatably positioned in a toothed groove in accordance with the present invention; and
FIG. 17 illustrates the rotational operation of an elastic click portion deviated from a toothed groove in accordance with the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

The present invention is similar to the related arts in that a top plate of a clip is fixed to its bottom plate through a coil spring and a hinge and the clip is fixed to one side of a case for an electronic device such as a mobile phone through a clamp member fitted into a through hole formed in the bottom plate.

However, the present invention is different from the related art in a connecting structure of a clip. Also, the present invention is different from the related art in that a clip can detachably be fixed to various electronic devices such as a case for a mobile phone.

For better understanding of the present invention, a connecting structure of a clip according to the present invention will be described along with its operation. It is noted that a connecting structure of a clip of a case for a mobile phone according to the present invention has various embodiments.

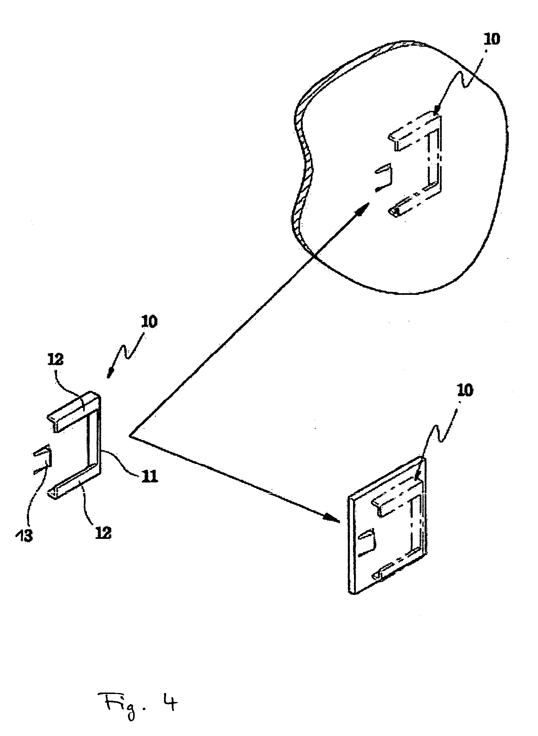

As shown in FIG. 4 to FIG. 7, a slider connecting structure 10 according to the present invention includes a "¬" shaped slider rack 12 and an elastic stopper 13. The slider rack 12 is provided with a limit edge 11 bent at one side. The elastic stopper 13 is provided at an inlet portion of the slider rack 12 opposite to the limit edge 11 and elastically protruded.

In other words, as shown in FIG. 4, the slider rack 12, the limit edge 11 and the elastic stopper 13 are connected to one another so as to constitute the slider connecting structure 10.

A slider 20 includes a slider plate 21 fitted into the slider rack 12 of the slider connecting structure, a circular plate 22 protruded from a center portion of the slider plate 21, and insertion holes 23 formed on a front surface of the circular plate 22.

Furthermore, a clamp member 40 includes a circular plate 42, an elastic click portion 50, and a rim edge 43. The circular plate 42 is inserted into a through hole 32 formed in the bottom plate 30, and has insertion protrusions 41 on a surface. The through hole 32 has a toothed groove 31. The elastic click portion 50 controls rotation of the clip 100. The rim edge 43 is formed with a diameter greater than that of the circular plate 42 in a single body with the circular plate 42. The slider connecting structure 10 is connected to the slider 20 through the clamp member 40.

In other words, the slider 20 is fitted into the slider rack 12 of the slider connecting structure 10 so that the elastic stopper 13 prevents the slider 20 from being detached from the slider rack 12. Also, the slider 20 is welded at high frequency in a state that the insertion protrusions 41 are fitted into the insertion holes 23 of the circular plate 22. Thus, the slider 20 can be detached from the slider connecting structure 10 if the clip 100 needs to be used.

The slider connecting structure 10 is extruded in a case A or a file holder in a single body. Alternatively, the slider connecting structure 10 is extruded on a separate synthetic resin plate C by injection molding.

That is, the slider connecting structure 10, as shown in FIG. 4, may be extruded in a synthetic resin plate C or a metal plate and then fixed to a product. Alternatively, the slider connecting structure 10 may directly be extruded in a product.

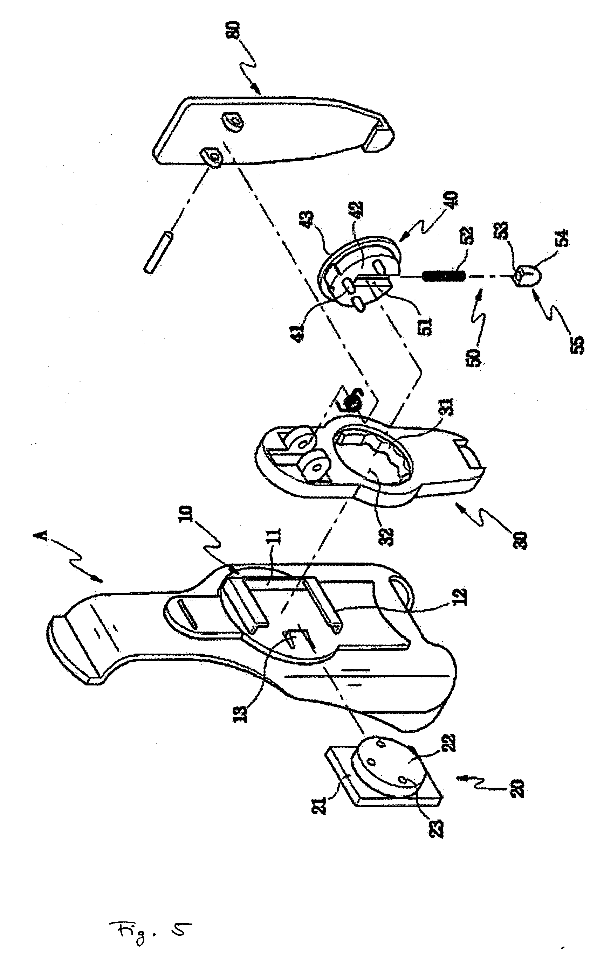

Two examples of the slider connecting structure 10 are shown in the present invention. First, as shown in FIG. 5, the slider connecting structure 10 is extruded simultaneously with the case A of the mobile phone in a single body by injection molding.

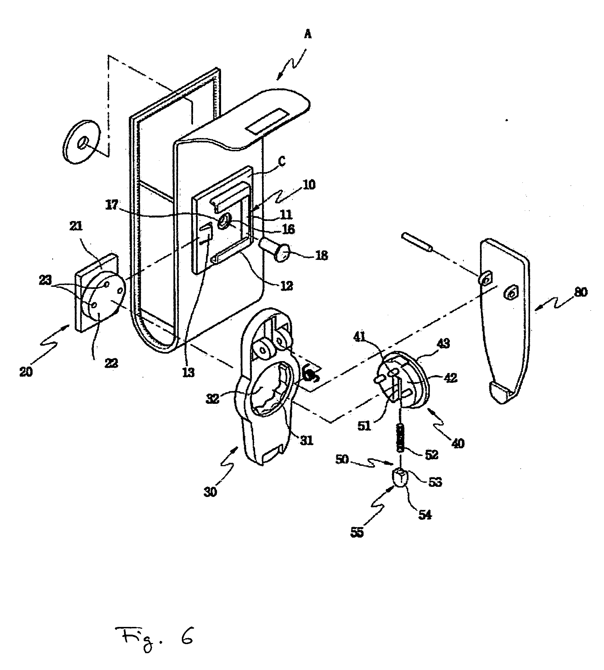

More preferably, as shown in FIG. 6, the slider connecting structure 10 is extruded on a separate synthetic resin plate C and then the synthetic resin plate C is fixed to a case A made of leather or cloth because the leather or cloth case A for the mobile phone cannot be extruded by injection molding.

In other words, as shown in FIG. 6, the synthetic resin plate C in which the slider connecting structure 10 is formed is provided with a rivet hole 17 having a step edge 16 at the center. Then, the synthetic resin plate C is tightly fixed to the leather case A through the rivet hole 17 using a rivet 18.

As a result, the slider 20 is smoothly fitted into the slider rack 12 of the slider connecting structure 10 extruded in the synthetic resin plate C because the rivet 18 is recessed in the step edge 16 inside the rivet hole 17 of the synthetic resin plate C.

If the slider 20 is once inserted into the slider rack 12, the elastic stopper 13 of the slider connecting structure 10 holds one side of the slider 20 so as not to easily detach the slider 20 from the slider rack 12.

Of course, a user can detach the slider 20 from the slider rack 12 by pushing the elastic stopper 13 if necessary.

As described above, the present invention is directed to the connecting structure of the clip used for the mobile phone.

The connecting structure of the clip according to the present invention is not limited to the aforementioned two examples of the slider connecting structure. The connecting structure of the clip 100 may be used for cases for various types of mobile phones or PDP and other products.

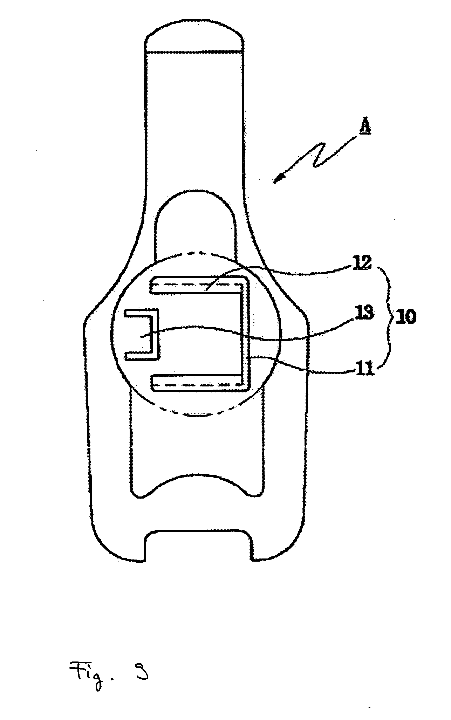

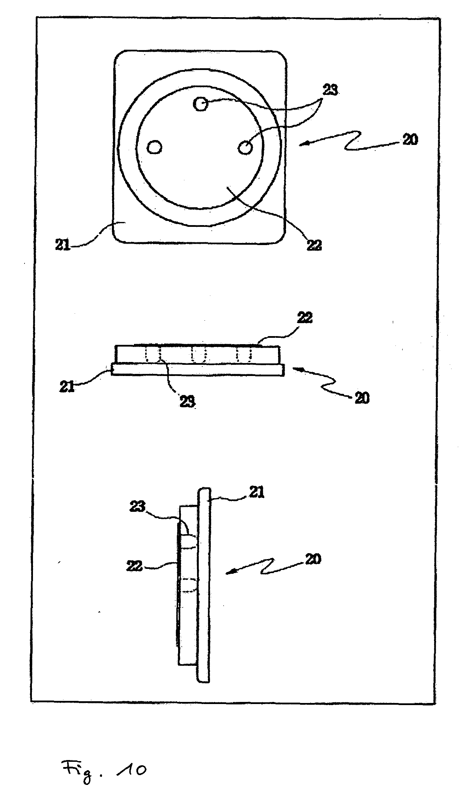

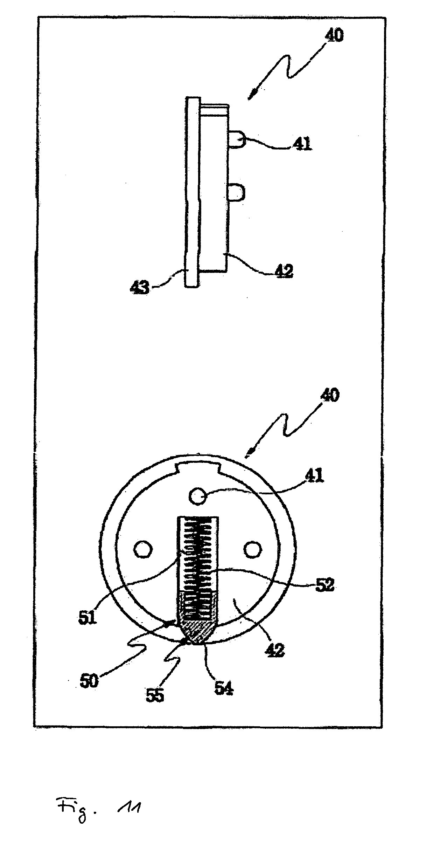

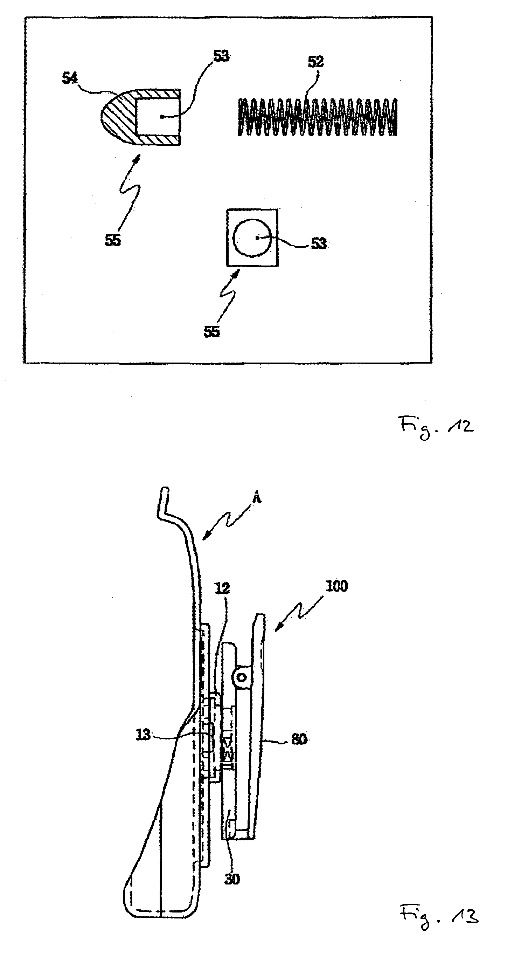

Meanwhile, in the present invention, as shown in FIGs. 5, 6, 11 and 12, the elastic click portion 50 is provided to freely rotate the clip 100.

The elastic click portion 50 includes a sliding groove 51 and an elastic spring 52. The sliding groove 51 is cut into four sections from the bottom of the circular plate 42 to its center portion. The elastic spring 52 is provided inside the sliding groove 51.

The elastic click portion 50 further includes an insertion hole 53 and an elastic protrusion 55. The elastic spring 52 is inserted into the insertion hole 53. The elastic protrusion 55 has a rectangular shape corresponding to the sliding groove 51 and is rounded at the end to form a ball portion 54.

Therefore, if the clip 100 is rotated in a state that the toothed groove 31 formed in the through hole 32 of the bottom plate 30 is in surface-contact with the ball portion 54 of the elastic protrusion 55, the elastic protrusion 55 is clicked while ascending and descending along the toothed groove 31 so as to induce limited rotation.

In this way, the clip 100 of the present invention is smoothly rotated by the elastic click portion 50. In this case, a frictional sound such as click is generated to allow a user to sense the rotational angle of the clip. This could lead to convenience of the user.

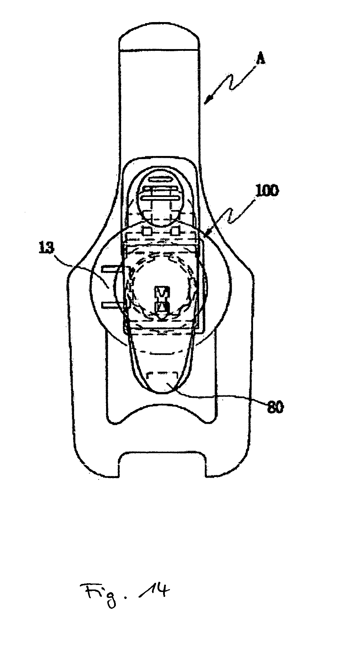

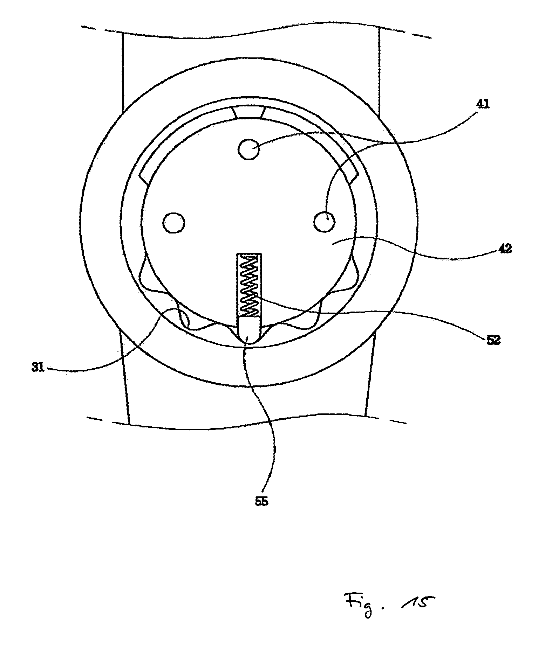

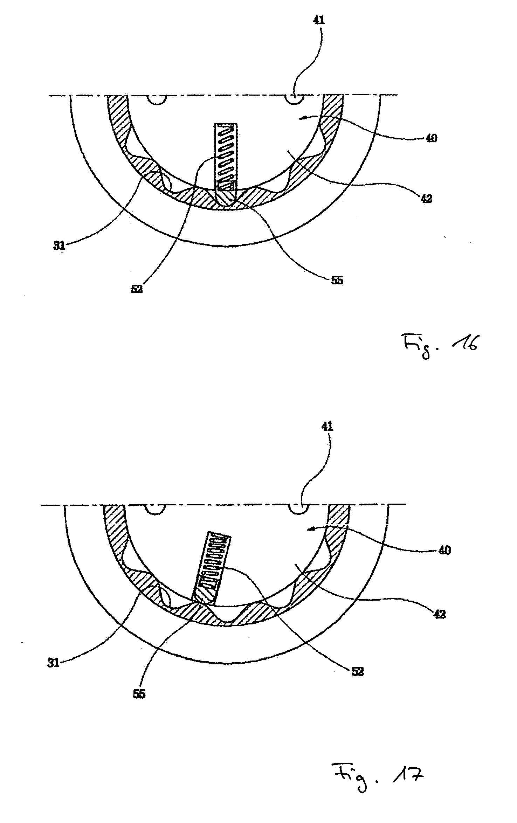

That is, as shown in FIG. 15 to FIG. 17, if the clip 100 is rotated, the clamp member 40 is fixably fitted into the through hole 32 of the bottom plate 30 but the elastic click portion 50 provided in the clamp member 40 moves along the through hole 32.

In other words, rotation of the clip 100 rotates the through hole 32, and the toothed groove 31 of the through hole 32 is in contact with the elastic protrusion 55 supported by the elastic spring 52 provided in the clamp member 40. The elastic protrusion 55 repeatedly comes in and out of the sliding groove 51 along the curve of the toothed groove 31.

Since the ball portion 54 provided at the end of the elastic protrusion 55 is rounded along the outer circumference, the elastic protrusion 55 smoothly ascends and descends depending on the curve of the toothed groove 31.

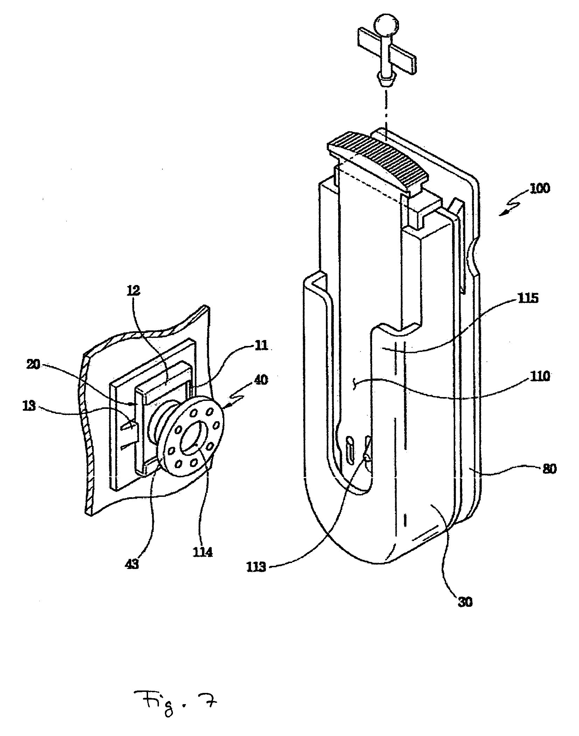

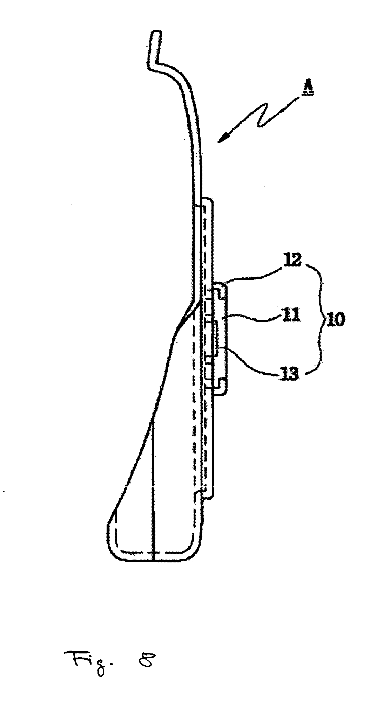

The clip 100 of the present invention can be fixed to various products by the connecting structure of the present invention. Also, the clip 100 shown in FIG. 7 may be fixed thereto.

The clip 100 shown in FIG. 7 is provided in such a manner that the slider 20 and the clamp member 40 are pushed into a guide groove 110. The guide groove 110 is formed on a rear surface of the bottom plate 30, and is partially opened.

In this case, a stopper groove 114 is provided at the center of the rim edge 43 of the clamp member 40 so that a latch 113 can be latched on the groove 114.

Also, a guide plate 115 is provided to prevent the rim edge 43 of the clamp member 40 pushed into the guide groove 110 from being gotten into the front surface. The groove 114 prevents the rim edge 43 from being gotten into an opening at the top.

Of course, the rim edge 43 can be released from the groove 114 through the latch 113 if a switch as shown is pushed.

Meanwhile, a method for assembling the clip 100 will now be described.

First, as shown in FIGS. 5 and 6, the clamp member 40 is fitted into the through hole 32 formed at the center of the bottom plate 30 of the clip for the mobile phone.

The slider 20 corresponding to the clamp member 40 is arranged to face the through hole 32 so that the insertion protrusions 41 are fitted into the insertion holes 23.

Preferably, the clamp member 40 and the circular plates 42 and 22 are manufactured with the same diameter as one another.

The slider 20 is welded at high frequency in a state that the insertion protrusions 41 are fitted into the insertion holes 23 to adjoin the circular plates 22 and 42 each other. Thus, the clamp member 40 and the slider 20 are formed in a single body by high-frequency welding.

However, the clip 100 of the present invention can be detached from the case at any time by the organized connection between the slider 20 and the slider connecting structure 10.

Meanwhile, the top plate 80 is fixed to the coupling body of the slider body 20, the bottom plate 30 and the clamp member 40 using a hinge 81 and a coil spring 82 so as to constitute the clip. This is to connect the clip 100 to the case for the mobile phone in a state that the clip 100 is previously assembled.

Then, the slider plate 21 of the slider 20 fixed to the clip 100 is fitted into the slider rack 12 of the slider connecting structure 10 extruded in either various products by injection molding or a separate synthetic resin plate C.

In the connecting structure of the clip and the method for assembling the clip according to the present invention, the clip 100 can be fixed to and detached from the slider connecting structure 10 if necessary.

In the method for assembling the clip according to the present invention, the assembling order may be varied depending on types of the product or working conditions.

As described above, the method for assembling a clip for a mobile phone and the connecting structure of the clip according to the present invention have the following advantages.

Since the clip can be rotated and can detachably be fixed to the case, it is possible to clean dust that may be generated in the clip due to long use.

In addition, the connecting structure of the clip is provided to easily connect or detach the clip to or from the case and other product in turn. Moreover, it is possible to replace the clip with another one if the clip is out of order.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A method for assembling a clip (100) connected to a case (A) for a mobile phone, the clip (100) including a top plate (80) and a bottom plate (30), the method comprising the steps of:
fitting a clamp member (40) to a through hole (32) formed at the center of the bottom plate (30) of the clip (100);
fitting insertion protrusions (41) of a slider (20) corresponding to the clamp member (40) into insertion holes (23) by arranging the slider (20) to face the through hole (32);
welding the slider (20) at high-frequency in a state that a circular plate (22) is in contact with another circular plate (42) as the insertion protrusions (41) are fitted into the insertion holes (23);
connecting the top plate (80) of the clip (100) to a coupling body of the slider (20), the bottom plate (30) and the clamp member (40) using a hinge (81) and a coil spring (82), so as to constitute the clip (100); and
fitting a slider plate (21) of the slider (20) connected to the clip (100) into a "¬" shaped slider rack (12) of a slider connecting structure (10) extruded in either various products by injection molding or a separate synthetic resin plate (C), so as to detachably connect the clip (100) to the slider connecting structure (10) if necessary.

2. The method as claimed in claim 1, wherein the respective steps are performed in a variable assembling order depending on the product or working conditions.

3. A connecting structure of a clip (100) of a case (A) for a mobile phone, the clip (100) including a top plate (80) and a bottom plate (30) connected to each other through a coil spring (82) and a hinge (81), fixed to one side of the case (A) through a clamp member (40) fitted into a through hole (32) formed in the bottom plate (30), the connecting structure of the clip (100) comprising:
a slider connecting structure (10) including a "¬" shaped slider rack (12) having an edge (11) bent at one side, and an elastic stopper (13) protruded with elasticity at an inlet portion of the slider rack (12) to face the bent edge (11) ;
a slider (20) including a slider plate (21) fitted into the slider rack (12) of the slider connecting structure (10), a circular plate (22) protruded from the slider plate (21), and insertion holes (23) formed on a front surface of the circular plate (22); and
a clamp member (40) including a circular plate (42) having insertion protrusions (41) on a surface, inserted into a through hole (32) having a toothed groove (31) formed in the bottom plate (30) of the clip (100), an elastic click portion (50) controlling rotation of the clip (100), and a rim edge (43)provided with a diameter greater than that of the circular plate (42) in a single body with the circular plate (42),
wherein the slider (20) is fitted into the slider rack (12) of the slider connecting structure (10) so that the elastic stopper (13) prevents the slider (20) from being detached from the slider rack (12), and the slider (20) is welded at high frequency in a state that the insertion protrusions (41) formed in the circular plate (42) of the clamp member (40) are fitted into the insertion holes (23) of the circular plate (22) of the slider (20) so that the slider (20) is detached from the slider connecting structure (10) if the clip (100) needs to be used.

4. The connecting structure of the clip as claimed in claim 3, wherein the slider connecting structure (10) is extruded either in the case for various mobile phones in a single body or on a separate synthetic resin plate (C) by injection molding.

5. The connecting structure of the clip as claimed in claim 3 or 4, wherein the separate synthetic resin plate (C) includes a rivet hole (17) having a step edge (16) at the center, so that the clip (100) is tightly fixed to the case (C) of leather through the rivet hole (17) using a rivet (18).

6. The connecting structure of the clip as claimed in claim 3, wherein the elastic click portion (50) includes:
a sliding groove (51) cut into four sections from the bottom of the circular plate (42) to its center portion;
an elastic spring (52) provided inside the sliding groove (51);
an insertion hole (53) into which the elastic spring (52) is inserted; and
an elastic protrusion (55) having a rectangular shape corresponding to the sliding groove (51), rounded at the end to form a ball portion (54),
wherein if the clip (100) is rotated in a state that the toothed groove (31) formed in the through hole (32) of the bottom plate (30) is in surface-contact with the ball portion (54) of the elastic protrusion (55), the elastic protrusion (55) is clicked while ascending and descending along the toothed groove (31) so as to induce limited rotation.
